# NOUVEAU FASCICULE DE BREVET EUROPEEN

(11) **EP 3 013 639 B2**
(45) Date de publication et mention de la décision concernant l'opposition: **26.07.2023**
(45) Mention de la délivrance du brevet: 15.04.2020
(21) Numéro de dépôt: 14749883.6
(22) Date de dépôt: 20.06.2014
(51) Int. Cl.: B60P 1/02, B60P 1/64

(54) **INSTALLATION POUR LE CHARGEMENT ET LE DÉCHARGEMENT DE CONTAINERS**
ANLAGE ZUM LADEN UND ENTLADEN VON CONTAINERN
FACILITY FOR LOADING AND UNLOADING CONTAINERS

(30) Priorité: 28.06.2013 FR 1356288; 21.10.2013 FR 1360245
(43) Date de publication de la demande: 04.05.2016
(73) Titulaire: GAUSSIN SA, 70400 Héricourt (FR)
(72) Inventeur: HECKY, Stéphane, F-90000 Belfort (FR); KLEIN, Simon, F-90360 La Chapelle-Sous-Rougemont (FR)
(74) Mandataire: Faetibold, Emmanuel
(86) Numéro de dépôt international: PCT/FR2014/051546
(87) Numéro de publication internationale: WO 2014/207354

(56) Documents cités:
- EP-B1- 2 496 442
- EP-B1- 3 013 721
- WO-A1-2008/046728
- DE-A1- 3 530 321
- US-A- 2 379 094
- US-A- 3 497 092
- Publications by Gaussin on 38th TOC Container Supply Chain Europe , exhibition and conferences, 25 June 2013 (2013-06-25), Ahoy, Port City Rotterdam , The Netherlands
- Flyer Docking Station by Gaussin, disporrible a https://www.gaussin.com/wpcontent/uploads/ 2017/03/PlaquetteDockingStation_889x21 Opdf;
- https:/www.YouTube.com/watch?y=xPHT1PDD7U
- https://www.YouTube.com/watch?y=C4wxsx-o2X k
- https://www.YouTube.com/watch?v=A-qfrjY12v 0
- https//www.YouTube.com/watch?v=2xMxSE8usOw
- Prospectus-2013 of Gaussin Manugistique, publie en Novembre 2013
- Prospectus 2012 of Gaussin Manugistique publie le 17 Juillet 2012

## Description

La présente invention entre dans le domaine de la manutention de conteneurs ou container, au niveau d'installations portuaires, aéroportuaires, ferroviaires, routières ou mixtes. L'invention trouvera une application préférentielle, mais aucunement limitative, dans le transport, le stockage et la manutention de container au sein d'une zone portuaire.

A cet effet, l'invention concerne une installation de chargement et de déchargement de conteneur.

De manière connue, un container est une enceinte de dimensions normalisées, se présentant sous la forme d'un bloc parallélépipédique et permettant d'y charger des marchandises en vue de leur stockage ainsi que leur transport, notamment par voie maritime sur des bateaux appelés « porte-containers ».

Plus précisément, un tel container comprend une structure en forme de parallélépipède rectangle, dont chaque coin est équipé d'un coin normalisé en acier, dit « coin ISO », reliant des montants métalliques verticaux. Ainsi, il est possible d'empiler plusieurs containers les uns sur les autres, formant une zone de stockage. Cet empilement est effectué par des engins de levage depuis des véhicules de transports pourvus d'une plateforme de réception d'un ou plusieurs containers, et inversement lors du dépilement. Ces opérations sont effectuées par l'intermédiaire d'une station ou « dock » recevant un ou plusieurs containers en vue de leur chargement ou déchargement sur la plate-forme d'un véhicule, réciproquement lors du dépilement ou de l'empilement depuis et vers la zone de stockage.

Par ailleurs, une station est constituée d'au moins deux glissières surélevées s'étendant horizontalement, parallèlement l'une par rapport à l'autre. Ces glissières présentent une section pourvue, d'une part d'une surface d'approche inclinée et, d'autre part, de surfaces d'appui. Ces glissières sont tournées l'une vers l'autre, et espacées pour recevoir la largeur standardisée des containers, afin de constituer des zones planes d'appui inférieur longitudinal sur laquelle vient reposer les containers, tout en le guidant lors de son insertion grâce auxdites surface inclinées formant un cône de centrage.

Dans un cas comme dans l'autre, ledit véhicule vient se placer entre les glissières et sous ces dernières. Pour ce faire, la station est surélevée par l'intermédiaire d'embases ou pieds s'étendant verticalement et reliant en partie haute, à intervalles réguliers, chaque glissière. Ainsi, le véhicule peut venir se positionner sous les glissières, en vue de charger ou décharger ses containers.

Etant donné que la station est surélevée, sur le châssis du véhicule est monté une table élévatrice motorisée de manière à passer d'une position basse à une position haute, et inversement. En position basse, la hauteur du châssis l'autorise à passer sous les glissières, tandis qu'en position haute, le débattement vertical de ladite table l'autorise à venir au dessus desdites glissières. Pour de telles raisons, cette table est définie de largeur inférieure à l'écartement des glissières et, par conséquent, inférieure à celle d'un conteneur.

Plus particulièrement, lors du chargement d'au moins un container déposé au préalable sur les glissières de la station, le véhicule se positionne au sein de la station, sous les glissières. Puis, sa table élévatrice est actionnée pour monter et lever le container, en passante entre les glissières, ledit conteneur ne reposant alors plus sur les glissières, supporté par la table. Ensuite, ce véhicule sort de la station et redescend sa plate-forme.

Lors du déchargement, avant de se positionner au sein de la station, le véhicule lève sa table et le container qui repose dessus. Puis il vient garer son châssis sous les glissières pour ensuite redescendre ladite table jusqu'en position basse, laissant alors le container reposer sur les glissières. Enfin, il repart à vide avec sa plate-forme baissée.

Une telle conception nécessite, par conséquent, d'équiper le châssis du véhicule d'une table élévatrice conçue, tout comme ledit châssis, d'une résistance mécanique suffisante pour être en mesure de prendre en charge un conteneur et le poids qu'il représente. La conséquence est une augmentation sensible du poids total du véhicule, en comparaison d'un véhicule dépourvu de table élévatrice. Un tel surpoids a une conséquence directe quant aux capacités mêmes de transport du véhicule, sachant par ailleurs que l'ensemble de ces composants doivent être dimensionnés pour prendre en compte ce poids supplémentaire. Ce surpoids influence également la vitesse de déplacement du véhicule, cette vitesse étant alors même limitée lorsqu'il ne supporte pas de charge et qu'il se déplace à vide.

En outre, le châssis est, en ce cas, pourvu de cales de retenue latérale, entre lesquelles vient s'inscrire le conteneur, lorsque la table élévatrice est en position basse, ceci pour garantir le maintien du conteneur pendant les phases de déplacement du véhicule. De ce fait, lesdites cales dépassent de la largeur du châssis et viennent de part et d'autre du conteneur.

Pour être en mesure de passer en les glissières de la station, ces cales ne peuvent pas suivre le mouvement d'élévation produit par la table. Autrement dit, lorsque la table est surélevée et chargée, en particulier en phase d'approche en vue du déchargement et de sortie après chargement, le conteneur n'est pas maintenu latéralement, n'assurant aucune stabilité et augmentant le risque de déversement.

Un exemple d'une telle solution est décrit dans le document WO 2008/046728, visant un véhicule destiné à recevoir deux conteneurs sur deux plates-formes élévatrices, alignés longitudinalement, montées mobiles verticalement sur un châssis roulant, depuis une position basse vers une position haute, et inversement. De plus, en position basse, le châssis comprend des moyens de maintien latéral des conteneurs, sous forme d'organes solidaires dudit châssis et s'étendant en saille verticalement, de part et d'autre de chaque plate-forme. Enfin, chaque plate-forme comprend, à une seule de ses extrémités distales, des cales assurant le bon positionnement longitudinal du conteneur, en particulier lors de sa prise en charge.

Un tel véhicule est destiné à coopérer avec un quai de chargement et de déchargement de conteneur. Un tel quai présente des glissières latérales, conformées en L et en opposition, destinées à recevoir un conteneur en le supportant par le dessous. Dès lors, un conteneur peut être levé par la plate-forme du véhicule venu se garer en dessous, puis déplacé en position haute, pour enfin être abaissé et venir être maintenu latéralement par lesdits organes, mais uniquement en position abaissée de ladite plate-forme, et inversement. Aucun maintien latéral du conteneur n'est assuré lors de ses phases d'élévation et de descente.

Une autre solution est décrite au travers du document US 2 379 094, visant un véhicule similaire avec une plate-forme arrière élévatrice, pour passer d'une position haute vers une position basse, et inversement. Cette plate-forme comprend un plateau amovible. Cette plate-forme peut coopérer avec un quai de chargement, possédant des glissières sous forme de cornières à angle droit, conformées en L. En particulier, le plateau peut être déposé ou récupéré réciproquement sur et depuis ledit quai. Par ailleurs, ledit plateau comprend des parois latérales, montées articulées en rotation selon une course à 90°, depuis une position relevées dans laquelle elles s'étendent verticalement, vers une position déployée dans laquelle elles s'étendent horizontalement, et inversement. En position déployée, ces parois latérales recouvrent l'écart entre les chants du plateau et la paroi intérieure des glissières, lorsque ledit plateau est en position de dépose sur le quai.

On constate que le châssis de réception du plateau amovible est clairement moins large que ledit plateau. Encore une fois, il y a aucun maintien latéral du plateau ou de ce qu'il support lors de sa montée ou de sa descente.

La présente invention a pour but de pallier les inconvénients de l'état de la technique, en proposant un véhicule dont le châssis assure le maintien latéral du conteneur lors de ces étapes de montée et de descente.

De façon additionnelle, un tel châssis est dépourvu de table élévatrice, mais est apte à remplir les fonctionnalités de cette dernière. En particulier, sans table élévatrice, le poids de ce véhicule est considérablement diminué, augmentant sa vitesse et rendant plus aisée sa manœuvrabilité.

Par ailleurs, ce châssis est pourvu de cales de retenue latérale escamotables. Plus précisément, de façon non limitative, lesdites cales de retenue latérale peuvent être montées mobiles par rapport audit châssis pour passer d'une position déployée de retenue latérale dudit conteneur vers une position escamotée, et inversement.

Selon une variante préférée, les glissières de la station comportent des ouvertures de passage de cales de retenue latérales prévues fixes par rapport au châssis du véhicule, pendant les phases de levage et de descente dudit châssis. Lesdites cales sont fixes, saillantes par rapport au châssis.

A cet effet, l'invention concerne une installation de chargement et de déchargement de conteneurs au moyen d'un véhicule pour le transport de conteneur, ce véhicule comportant un châssis, d'une part, reposant sur des moyens de roulement sous forme d'au moins deux essieux dont au moins un est directeur, d'autre part, sur lequel est susceptible de reposer au moins un conteneur, d'autre part encore, équipé de cales de retenue latérale dudit conteneur, lesdites cales se présentent sous la forme d'un élément formant une saillie sur le côté de longerons dudit châssis, d'autre part aussi, comportant une largeur inférieure à celle d'un conteneur pour passer entre deux glissières support de chargement et de déchargement d'un conteneur, tandis que ladite installation comporte au moins une station composée d'au moins deux glissières surélevées s'étendant horizontalement, parallèlement l'une par rapport à l'autre, lesdites glissières présentant une section pourvue au moins de surfaces d'appui tournées l'une vers l'autre, afin de constituer des zones planes d'appui inférieur longitudinal sur laquelle vient reposer les containers. Selon l'invention cette installation est caractérisée par le fait que lesdites glissières comportent au niveau de leur surface d'appui des ouvertures de passage desdites cales de retenue latérale.

L'invention concerne encore une installation de chargement et de déchargement de conteneurs pourvue d'un véhicule pour le transport de conteneur, ce véhicule comportant un châssis, d'une part, reposant sur des moyens de roulement sous forme d'au moins deux essieux dont au moins un est directeur, d'autre part, sur lequel est susceptible de reposer au moins un conteneur, d'autre part encore, équipé de cales de retenue latérale dudit conteneur, lesdites cales se présentent sous la forme d'un élément formant une saillie sur le côté de longerons dudit châssis, d'autre part aussi, comportant une largeur inférieure à celle d'un conteneur pour passer entre deux glissières support de chargement et de déchargement d'un conteneur, tandis que ladite installation comporte au moins une station composée d'au moins deux glissières surélevées s'étendant horizontalement, parallèlement l'une par rapport à l'autre, lesdites glissières présentant une section pourvue au moins de surfaces d'appui tournées l'une vers l'autre, afin de constituer des zones planes d'appui inférieur longitudinal sur laquelle vient reposer les containers, caractérisée par le fait que lesdites glissières sont constituées de tronçons, espacés d'un intervalle correspondant au moins à la largeur de passage desdites cales de retenue latérale et en ce que lesdites cales sont escamotables.

L'invention concerne encore une telle installation caractérisée par le fait que lesdites glissières sont constituées de tronçons, espacés d'un intervalle correspondant au moins à la largeur de passage desdites cales de retenue latérale.

Selon une autre particularité de l'invention, l'installation peut comporter plusieurs stations juxtaposées, deux stations adjacentes comportent un module d'embase commun supportant leurs glissières contiguës. En somme, au lieu de prévoir une embase distincte pour chaque station, deux stations partagent la même embase, diminuant l'encombrement d'implantation nécessaire et augmentant l'espacement pour le passage dudit châssis.

Plus précisément, les surfaces inclinées des glissières ou tronçons de glissières sont disposés dos à dos tandis que leurs surfaces d'appui s'étendent vers l'extérieur.

Ces modules d'embase simplement conçus permettent d'être implantés, à espacement choisi, pour réaliser rapidement des stations contiguës.

D'autres caractéristiques et avantages de l'invention ressortiront de la description détaillée qui va suivre des modes de réalisation non limitatifs de l'invention, en référence aux figures annexées, dans lesquelles :
- la figure 1 représente une vue schématisée en perspective d'un exemple de réalisation d'une installation de chargement et de déchargement de conteneurs selon l'invention, constituée d'une pluralité de stations juxtaposées, en particulier quatre stations équipées d'un module selon l'invention ;
- la figure 2 représente une vue schématisée en coupe transversale verticale d'une partie de la figure 1, montrant deux stations chargées de conteneurs, lesdites stations étant équipées au niveau de leurs glissières adjacentes d'un module selon l'invention ;
- la figure 3 représente une vue schématisée en perspective d'un mode de réalisation dans lequel une unique glissière présente des ouvertures pour le passage desdites cales ;
- la figure 4 représente une vue schématisée en perspective d'un mode de réalisation spécifique d'un véhicule selon l'invention ;
- la figure 5 représente une vue schématisée de dessus de la figure 4, en position déployée desdites cales mobiles ;
- la figure 6 représente une vue schématisée similaire à la figure 4, en position escamotée desdites cales mobiles ;
- la figure 7 représente une vue schématisée selon une coupe verticale transversale du détail du châssis, en position déployée desdites cales mobiles, lorsque ledit véhicule est chargé d'un conteneur ; et
- la figure 8 représente une vue schématisée selon une coupe verticale transversale du détail du châssis, en position escamotée desdites cales mobiles, lorsque ledit véhicule est chargé d'un conteneur.

La présente invention concerne un véhicule 1 pour le transport de conteneur 2.

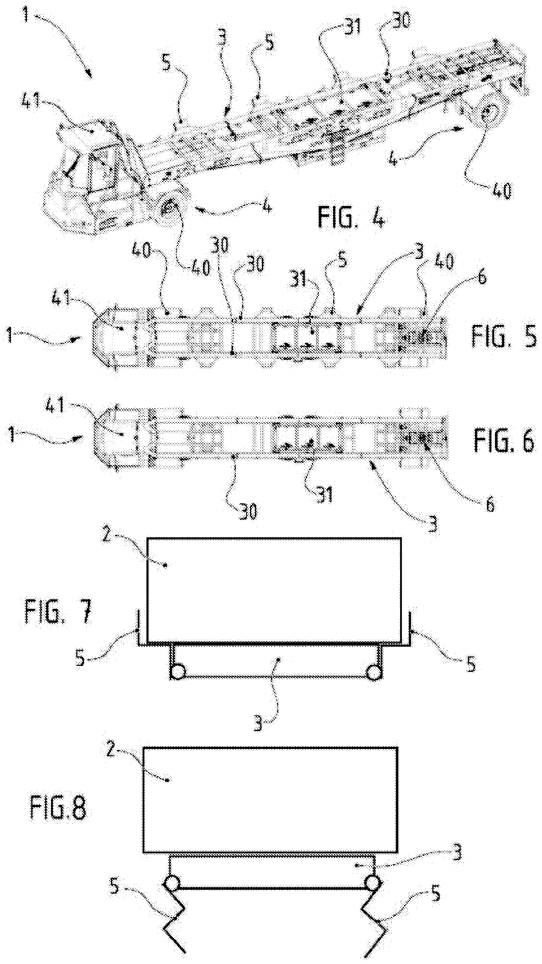

Un tel véhicule 1 comporte un châssis 3, reposant sur des moyens de roulement 4, sous forme d'au moins deux essieux 40, dont au moins un est directeur. Selon le mode de réalisation de la figure 4, un tel véhicule 1 comprend un essieu directeur situé à l'avant, au niveau d'un poste de pilotage sous forme d'une cabine 41. L'essieu situé à l'arrière est alors non directionnel.

Ledit châssis 3 intègre aussi des moyens 31 de motorisation autonome, assurant l'entraînement des moyens de roulement 4 en vue du déplacement dudit véhicule 1.

Sur ce châssis 3 est susceptible de reposer au moins un conteneur 2. De préférence, la longueur dudit châssis 3 permet de venir y déposer en face supérieure un ou plusieurs conteneurs 2, en fonction de leur longueur. A cet effet, la face supérieure du châssis 3 constitue alors des moyens de réception de conteneurs 2 s'apparentant à un plateau arrière.

A ce titre, selon le mode de réalisation préférentiel, représenté sur les figures 4 à 6, le châssis 3 est constitué d'un assemblage de longerons 30 entretoisés et renforcés, assurant la rigidité longitudinale et transversale dudit plateau arrière, ainsi que la résistance à la charge de plusieurs conteneurs 2.

Avantageusement, ledit châssis 3 comporte une largeur inférieure à celle d'un conteneur 2 pour passer entre deux rampes ou glissières support de chargement et de déchargement d'un conteneur 2, en particulier au niveau d'une station 7 de chargement et déchargement de conteneur 2. En somme, le châssis 3 est dimensionné de sorte qu'un conteneur 2 dépasse de chaque côté, lorsqu'il est chargé sur le véhicule 1. Le ou les conteneurs 2 ne sont alors supportés que par le dessous.

C'est la raison pour laquelle ledit châssis 3 est encore équipé de cales 5 de retenue latérale dudit conteneur 2. Ces cales 5 s'étendant latéralement, par paire, en saillie de part et d'autre dudit châssis 3, et assurent par deux ou par quatre le maintien d'un conteneur 2 déposé sur le plateau arrière. A cet effet, lesdites cales 5 présentent entre elles des espacements choisis en fonction des longueurs standardisées des différents types de conteneurs 2. Leur longueur est aussi déterminée pour permettre le maintien de conteneurs 2 de différents types.

A ce titre, on notera que cet espacement est prévu pour permettre la réception de conteneur ou container de longueurs standardisées, à savoir vingt, trente ou quarante pouces, soit réciproquement 6058, 3657 ou 12192 millimètres. Plus précisément, chaque cale 5 se présente sous la forme d'un élément formant une saillie sur le côté des longerons 30 dudit châssis 3. Chaque cale 5 présente aussi une forme de redent, à savoir qu'elle présente une face reliée au châssis 3 et s'étendant horizontalement ou sensiblement horizontalement, dans le plan de la face supérieure dudit châssis 3, reliée à une extrémité libre orientée verticalement ou sensiblement verticalement. Cette dernière assure le maintien latéral du conteneur 2 chargé à l'arrière du véhicule 1.

Selon une caractéristique essentielle, le véhicule 1 caractérisé par le fait que son châssis 3 repose sur lesdits essieux 40 par l'intermédiaire de moyens 6 de suspension hydraulique constituant des moyens de levage dudit châssis 3. Ce levage s'opère selon une course supérieure à 200 millimètre (mm), de préférence supérieure à 500 mm.

En somme, le véhicule 1 ne comporte pas de plate-forme arrière, montée sur son châssis 3 et susceptible de monter et descendre. C'est directement le châssis 3 qui est motorisé, afin d'effectuer les opérations de levage, la montée et la descente, en vue des opérations de chargement et déchargement de conteneurs 2. Ainsi, la conception et la construction dudit châssis 3 est considérablement simplifiée, tout en diminuant son coût de fabrication et surtout en allégeant son poids total hors charge.

Selon un mode particulier de réalisation, lesdits moyens de suspension 6 se présentent sous la forme de vérins ou pistons hydrauliques, alimentés au moins en partie par lesdits moyens de motorisation autonome 31.

Le débattement desdits moyens de suspension 6 autorise le châssis 3 à se lever au-dessus du sol de manière à dépasser la hauteur des glissières d'une station 7 de chargement ou déchargement de conteneur 2.

Par conséquent, on comprend que le châssis 3 pouvant monter et descendre, tandis que les cales 5 sont directement assemblées sur ledit châssis 3, que les conteneurs 2 qu'il supporte sont en permanence maintenus, y compris pendant les opérations de levage ou le déplacement du véhicule 1 alors que son châssis 3 est en position haute.

A ce titre, étant donné que les cales 5, en position de maintien d'un conteneur 2, dépassent sur les côtés du châssis 3, au-delà de la largeur des conteneurs 2, elles ne permettent plus le passage entre les glissières d'une station 7.

Selon un mode de réalisation connexe et subsidiaire, non limitatif, les cales 5 sont prévues escamotables, à savoir qu'elles peuvent s'effacées pour ne plus s'étendre sur les côtés dudit châssis 3.

Pour ce faire, lesdites cales 5 de retenue latérale sont montées mobiles par rapport audit châssis 3 pour passer d'une position déployée de retenue latérale dudit conteneur 2 vers une position escamotée, et inversement. La position déployée est représentée sur les figures 5 et 7, tandis que la position escamotée est représentée sur les figures 6 et 8.

Selon une configuration particulière, en position escamotée, lesdites cales 5 se situent au sein d'un espace délimité par la largueur du châssis 3.

Selon une autre configuration, en position escamotée, lesdites cales 5 sont escamotées sous ledit châssis 3, comme visible sur la figure 8.

Dans ce mode de réalisation spécifique, les cales 5 sont articulées en rotation ou pivotement, de manière à décrire une course selon un arc de cercle, pour venir tourner et se retrouver en butée ou fin de course sous le châssis 3.

Selon un autre mode de réalisation préférée, les cales 5 peuvent être montées en déplacement verticalement et latéralement, selon des translations, afin de venir s'introduire directement au sein dudit châssis 3, notamment au sein de logement ou d'espaces ménagés à cet effet.

Ainsi, il est possible de rentrer les cales 5 au dernier moment, lors du levage du châssis 3, lorsque le véhicule 1 se trouve déjà garé au sein de la station 7.

Selon une autre possibilité, lesdites cales 5 sont prévues fixes par rapport au châssis 3.

Dès lors, il a été imaginé de prévoir des trous pour le passage desdites cales 5 au travers des glissières de la station 7, lors de leur montée et de leur descente.

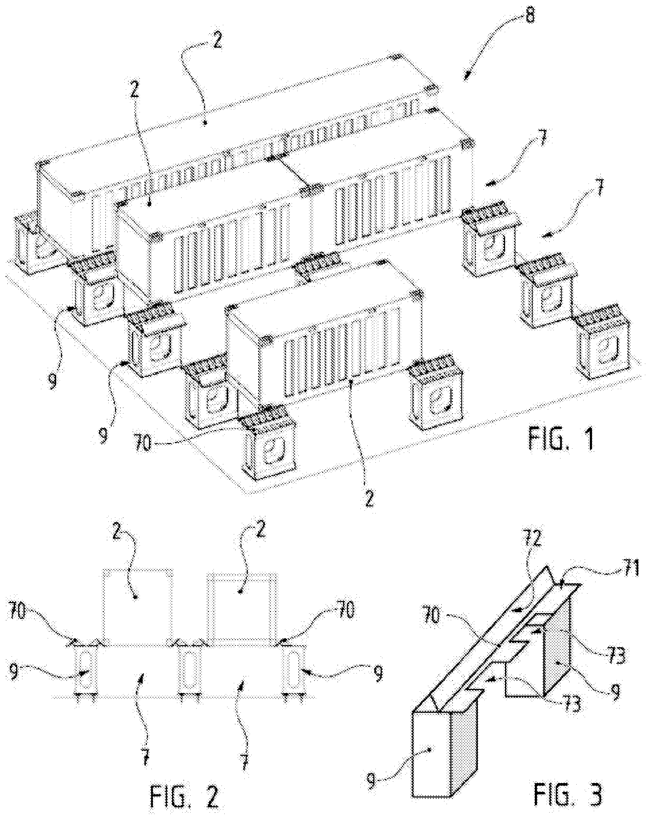

A cet effet, l'invention concerne aussi une installation 8 de chargement et de déchargement de conteneurs 2 au moyen d'un véhicule 1 tel que précédemment décrit. Une telle installation 8, comportant au moins une station 7, de préférence plusieurs, comme représenté sur la figure 1.

Chaque station 7 est composée d'au moins deux glissières 70 surélevées s'étendant horizontalement, parallèlement l'une par rapport à l'autre. Lesdites glissières 70 présentent une section pourvue au moins de surfaces d'appui 71 tournées l'une vers l'autre, afin de constituer des zones planes d'appui inférieur longitudinal sur laquelle vient reposer les containers 2. En somme, chaque conteneur 2 vient reposer au niveau de ses bords inférieurs latéraux sur les surfaces d'appui 71 de deux glissières 70, comme visible sur les figures 1 et 2.

En outre, chaque glissière 70 comporte aussi une surface inclinée 72, dédiées au guidage pour centrer le container 2 lors de son positionnement sur la station 7. Les faces inclinées 72 de deux glissières 7 situées en vis-à-vis sont orientées de façon convergente du haut vers le bas.

Dans le cas de cales fixes 5, lesdites glissières 70 comportent au niveau de leur surface d'appui 71 des ouvertures 73 de passage desdites cales 5 de retenue latérale en position déployée. Une telle conception est représentée sur la figure 3.

Selon une autre configuration, lesdites glissières 70 sont constituées de tronçons, espacés d'un intervalle correspondant au moins à la largeur de passage desdites cales 5 de retenue latérale. En somme, chaque glissière 70 n'est plus constituée d'un unique élément longitudinal ou d'un assemblage d'éléments longitudinaux sur toute sa longueur, mais de segments longitudinaux, espacés entre eux.

Dans cette dernière configuration, l'implantation de chaque station 7 est alors considérablement facilitée, et son coût diminué.

Dans cette même démarche, il a été imaginé de simplifier l'installation 8 lorsqu'elle comprend au moins deux stations 7. Pour ce faire, deux stations adjacentes comportent une embase 9 commune supportant leurs glissières 70 contiguës. En d'autres termes, la surélévation d'une paire de glissières 70 (ou tronçon de glissière) de deux stations 7 situées l'une à côte de l'autre, s'effectue au travers d'un seul pied de rehaussement.

Encore une fois, cette embase 9 unique pour une paire de station 7 permet de simplifier l'implantation, tout en diminuant les coûts, mais aussi en rapprochant les stations 7 les unes des autres, ayant pour résultat de diminuer l'encombrement au sol.

Dans cette optique, l'invention concerne encore un module d'embase 9 de deux stations 7 de chargement et de déchargement adjacentes. Un tel module est constitué par un poteau surmonté de deux glissières 7 ou au moins deux tronçons de glissières adoptant une disposition symétrique par rapport à un plan médian vertical. En particulier, la symétrie s'applique au moins aux surfaces d'appui 71, qui s'étendent alors symétriquement de part et d'autre dudit plan médian.

Selon le mode de réalisation préférentiel, les surfaces inclinées 72 desdites glissières 7 ou tronçons de glissières sont disposés dos à dos, tandis que leurs surfaces d'appui 71 s'étendent vers l'extérieur. Une telle configuration est visible sur la figure 2.

Ainsi, il est possible de constituer deux stations 7 à partir d'un unique module formant une embase 9 conjointe ou commune.

Les différents systèmes selon l'invention, de façon combinée, en coopérant les uns avec les autres, permettent de simplifier la conception et l'implantation de stations 7 et d'installation 8 de chargement et déchargement de conteneur 2. Les modules indépendants autorisent la création de stations 7 partageant un même appui au sol, tout en créant l'espace entre les tronçons de glissières, nécessaire pour assurer le levage avec des cales 5 fixes. De plus, il est possible de rapprocher les embases 9, diminuant l'espace au sein duquel le châssis 3 spécifique du véhicule selon l'invention doit s'insérer, tout en assurant le levage et la descente des conteneurs. Dès lors, ce châssis 3 de levage simplifié, sans plate-forme rapportée, assure cette manœuvre à l'intérieur de telles stations 7.

## Revendications

1. Installation (8) de chargement et de déchargement de conteneurs (2) au moyen d'un véhicule (1) pour le transport de conteneur (2), ce véhicule (1) comportant un châssis (3), d'une part, reposant sur des moyens de roulement (4) sous forme d'au moins deux essieux (40) dont au moins un est directeur, d'autre part, sur lequel (3) est susceptible de reposer au moins un conteneur (2), d'autre part encore, équipé de cales (5) de retenue latérale dudit conteneur (2), lesdites cales se présentent sous la forme d'un élément formant une saillie sur le côté de longerons (30) dudit châssis (3), d'autre part aussi, comportant une largeur inférieure à celle d'un conteneur (2) pour passer entre deux glissières support de chargement et de déchargement d'un conteneur (2), tandis que ladite installation (8) :
- comporte au moins une station (7) composée d'au moins deux glissières (70) surélevées s'étendant horizontalement, parallèlement l'une par rapport à l'autre, lesdites glissières (70) présentant une section pourvue au moins de surfaces d'appui (71) tournées l'une vers l'autre, afin de constituer des zones planes d'appui inférieur longitudinal sur laquelle vient reposer les containers (2),
- est **caractérisée par le fait que** lesdites glissières (70) comportent au niveau de leur surface d'appui (71) des ouvertures (73) de passage desdites cales (5) de retenue latérale.

2. Installation (8) de chargement et de déchargement de conteneurs (2) au moyen d'un véhicule (1) pour le transport de conteneur (2), l'installation (8) comprenant le véhicule (1), ce véhicule (1) comportant un châssis (3), d'une part, reposant sur des moyens de roulement (4) sous forme d'au moins deux essieux (40) dont au moins un est directeur, d'autre part, sur lequel (3) est susceptible de reposer au moins un conteneur (2), d'autre part encore, équipé de cales (5) de retenue latérale dudit conteneur (2), lesdites cales se présentent sous la forme d'un élément formant une saillie sur le côté de longerons (30) dudit châssis (3), d'autre part aussi, comportant une largeur inférieure à celle d'un conteneur (2) pour passer entre deux glissières support de chargement et de déchargement d'un conteneur (2), tandis que ladite installation (8) :
- comporte au moins une station (7) composée d'au moins deux glissières (70) surélevées s'étendant horizontalement, parallèlement l'une par rapport à l'autre, lesdites glissières (70) présentant une section pourvue au moins de surfaces d'appui (71) tournées l'une vers l'autre, afin de constituer des zones planes d'appui inférieur longitudinal sur laquelle vient reposer les containers (2),
- est **caractérisée par le fait que** lesdites glissières (70) sont constituées de tronçons, espacés d'un intervalle correspondant au moins à la largeur de passage desdites cales (5) de retenue latérale et en ce que lesdites cales (5) sont escamotables.

3. Installation selon l'une quelconque des revendications précédentes, **caractérisée par le fait que** ledit châssis (3) repose sur lesdits essieux (40) par l'intermédiaire de moyens de suspension hydraulique (6) constituant des moyens de levage dudit châssis (3) selon une course supérieure à 200 millimètre, de préférence supérieure à 500 mm.

4. Installation selon la revendication 1, **caractérisée par le fait que** lesdites cales (5) de retenue latérale sont montées fixes par rapport audit châssis (3).

5. Installation (8) selon l'une quelconque des revendications précédentes, comportant plusieurs stations juxtaposées, **caractérisée par le fait que** deux stations (7) adjacentes comportent un module d'embase (9) commune supportant leurs glissières (70) contiguës.

6. Installation selon la revendication 5, **caractérisé en ce qu'**un module d'embase (9) de deux stations (7) de chargement et de déchargement adjacentes est constitué par un poteau surmonté de deux glissières (70) ou au moins deux tronçons de glissières adoptant une disposition symétrique par rapport à un plan médian vertical.

7. Installation selon la revendication 6, dont chaque glissière (70) comporte aussi une surface inclinée (72), dédiées au guidage pour centrer le container (2) lors de son positionnement sur la station (7), **caractérisé par le fait que** les surfaces inclinées (72) desdites glissières ou tronçons de glissières sont disposés dos à dos, tandis que leurs surfaces d'appui (71) s'étendent vers l'extérieur.

## Patentansprüche

1. Anlage (8) zum Laden und Entladen von Containern (2) mittels eines Fahrzeugs (1) für den Transport eines Containers (2), wobei dieses Fahrzeug (1) ein Fahrgestell (3) aufweist, das einerseits auf Rollmitteln (4) in der Form von mindestens zwei Achsen (40) ruht, von denen eine lenkend ist, andererseits auf dem (3) mindestens ein Container (2) ruhen kann, weiter andererseits mit seitlichen Rückhaltekeilen (5) des Containers (2) ausgestattet ist, wobei die Keile die Form eines Elements vorweisen, das einen Vorsprung auf der Seite von Längsträgern (30) des Fahrgestells (3) ausbildet, andererseits auch eine Breite, die geringer als die eines Containers (2) ist, zum Passieren zwischen zwei stützenden Gleitführungen zum Laden und Entladen eines Containers (2) aufweist, während die Anlage (8):
- mindestens eine Station (7) aufweist, die aus mindestens zwei erhöhten Gleitführungen (70) besteht, die sich horizontal parallel zueinander erstrecken, wobei die Gleitführungen (70) einen Abschnitt vorweisen, der mit mindestens Auflageoberflächen (71) versehen ist, die einander gegenüberliegen, um flache Zonen einer geringeren Längsauflage auszubilden, auf der die Container (2) ruhen,
- **dadurch gekennzeichnet ist, dass** die Gleitführungen (70) auf der Höhe ihrer Auflageoberfläche (71) Öffnungen (73) zum Passieren der seitlichen Rückhaltekeile (5) aufweisen.

2. Anlage (8) zum Laden und Entladen von Containern (2) mittels eines Fahrzeugs (1) für den Transport eines Containers (2), wobei die Anlage (8) ein Fahrzeug (1) umfasst, wobei dieses Fahrzeug (1) ein Fahrgestell (3) aufweist, das einerseits auf Rollmitteln (4) in der Form von mindestens zwei Achsen (40) ruht, von denen eine lenkend ist, andererseits auf dem (3) mindestens ein Container (2) ruhen kann, weiter andererseits mit seitlichen Rückhaltekeilen (5) des Containers (2) ausgestattet ist, wobei die Keile die Form eines Elements vorweisen, das einen Vorsprung auf der Seite von Längsträgern (30) des Fahrgestells (3) ausbildet, andererseits auch eine Breite, die geringer als die eines Containers (2) ist, zum Passieren zwischen zwei stützenden Gleitführungen zum Laden und Entladen eines Containers (2) aufweist, während die Anlage (8):
- mindestens eine Station (7) aufweist, die aus mindestens zwei erhöhten Gleitführungen (70) besteht, die sich horizontal parallel zueinander erstrecken, wobei die Gleitführungen (70) einen Abschnitt vorweisen, der mit mindestens Auflageoberflächen (71) versehen ist, die einander gegenüberliegen, um flache Zonen der geringeren Längsauflage auszubilden, auf der die Container (2) ruhen,
- **dadurch gekennzeichnet ist, dass** die Gleitführungen (70) aus Teilstücken bestehen, die um ein Intervall beabstandet sind, das mindestens der Breite der Passage der seitlichen Rückhaltekeile (5) entspricht, und **dass** die Keile (5) einziehbar sind.

3. Anlage nach einem der vorstehenden Ansprüche,
**dadurch gekennzeichnet, dass** das Fahrgestell (3) auf den Achsen (40) über hydraulische Aufhängemittel (6) ruht, die Hebemittel des Fahrgestells (3) gemäß einem Hub von mehr als 200 Millimeter, vorzugsweise mehr als 500 mm bilden.

4. Anlage nach Anspruch 1, **dadurch gekennzeichnet, dass** die seitlichen Rückhaltekeile (5) fest an dem Fahrgestell (3) montiert sind.

5. Anlage (8) nach einem der vorstehenden Ansprüche, die mehrere nebeneinander liegende Stationen aufweist, **dadurch gekennzeichnet, dass** zwei benachbarte Stationen (7) ein gemeinsames Basismodul (9) aufweisen, das ihre aneinandergrenzenden Gleitführungen (70) stützt.

6. Anlage nach Anspruch 5, **dadurch gekennzeichnet, dass** ein Basismodul (9) von zwei benachbarten Stationen (7) zum Laden und Entladen aus einem Pfosten besteht, der von zwei Gleitführungen (70) oder mindestens zwei Teilstücken der Gleitführungen überragt wird, die relativ zu einer vertikalen Mittelebene eine symmetrische Anordnung annehmen.

7. Anlage nach Anspruch 6, wobei jede Gleitführung (70) auch eine abgewinkelte Oberfläche (72) aufweist, die dazu bestimmt ist, den Container (2) bei seiner Positionierung auf der Station (7) zu zentrieren,
**dadurch gekennzeichnet, dass** die abgewinkelten Oberflächen (72) der Gleitführungen oder die Teilstücke der Gleitführungen Rücken an Rücken angeordnet sind, während sich ihre Auflageoberflächen (71) nach außen erstrecken.

## Claims

1. Facility (8) for loading and unloading containers (2) by means of a vehicle (1) for transporting containers (2), this vehicle (1) having a chassis (3) which rests on rolling means (4) in the form of at least two axles (40), at least one of which is a guiding axle, on which chassis (3) at least one container (2) is capable of resting, said chassis being provided with wedges (5) for laterally retaining said container (2), said wedges being in the form of an element forming a protrusion on the side of side members (30) of said chassis (3), and said chassis also having a width smaller than that of a container (2) so as to pass between two support guideways for loading and unloading a container (2), while said facility (8):
- has at least one station (7) composed of at least two raised guideways (70) extending horizontally, in parallel with each other, said guideways (70) having a portion provided at least with bearing surfaces (71) facing each other, in order to form flat longitudinal lower support areas on which the containers (2) rest,
- is **characterized by** the fact that said guideways (70) have, in their bearing surface (71), openings (73) for the passage of said lateral retaining wedges (5).

2. Facility (8) for loading and unloading containers (2) by means of a vehicle (1) for transporting containers (2), the facility (8) comprising the vehicle (1), this vehicle (1) having a chassis (3) which rests on rolling means (4) in the form of at least two axles (40), at least one of which is a guiding axle, on which chassis (3) at least one container (2) is capable of resting, said chassis being provided with wedges (5) for laterally retaining said container (2), said wedges being in the form of an element forming a protrusion on the side of side members (30) of said chassis (3), and said chassis also having a width smaller than that of a container (2) so as to pass between two support guideways for loading and unloading a container (2), while said facility (8):
- has at least one station (7) composed of at least two raised guideways (70) extending horizontally, in parallel with each other, said guideways (70) having a portion provided at least with bearing surfaces (71) facing each other, in order to form flat longitudinal lower support areas on which the containers (2) rest,
- is **characterized by** the fact that said guideways (70) are made up of segments that are spaced apart by a gap corresponding to at least the passage width of said lateral retaining wedges (5), and **in that** said wedges (5) are retractable.

3. Facility according to either of the preceding claims, **characterized by** the fact that said chassis (3) rests on said axles (40) by means of hydraulic suspension means (6) that form means for lifting said chassis (3) by a height greater than 200 millimeters, preferably greater than 500 mm.

4. Facility according to claim 1, **characterized by** the fact that said lateral retaining wedges (5) are mounted so as to be fixed relative to said chassis (3).

5. Facility (8) according to any of the preceding claims, having a plurality of stations placed side by side, **characterized by** the fact that two adjacent stations (7) have a common base module (9) supporting their contiguous guideways (70).

6. Facility according to claim 5, **characterized in that** a base module (9) of two adjacent loading and unloading stations (7) consists of a post topped by two guideways (70) or at least two guideway segments assuming a symmetrical arrangement relative to a vertical median plane.

7. Facility according to claim 6, wherein each guideway (70) also has an inclined surface (72), said surfaces being designed for guiding in order to center the container (2) during its positioning on the station (7), **characterized by** the fact that the inclined surfaces (72) of said guideways or guideway segments are arranged back to back, while their bearing surfaces (71) extend outward.
